(19) **Europäisches Patentamt**

**European Patent Office**

**Office européen des brevets**

(11) **EP 1 422 831 A1**

(12) **EUROPÄISCHE PATENTANMELDUNG**

(43) Veröffentlichungstag:
26.05.2004   Patentblatt 2004/22

(51) Int Cl.⁷: **H04B 1/707**

(21) Anmeldenummer: **02026103.8**

(22) Anmeldetag: **22.11.2002**

| | |
|---|---|
| (84) Benannte Vertragsstaaten:<br>**AT BE BG CH CY CZ DE DK EE ES FI FR GB GR IE IT LI LU MC NL PT SE SK TR**<br>Benannte Erstreckungsstaaten:<br>**AL LT LV MK RO SI**<br><br>(71) Anmelder: **SIEMENS AKTIENGESELLSCHAFT**<br>**80333 München (DE)**<br><br>(72) Erfinder:<br>• **Breining, Christina, Dr.**<br>**89075 Ulm (DE)** | • **Dieterich, Hans, Dr.**<br>**89075 Ulm (DE)**<br>• **Frey, Thomas, Dr.**<br>**89081 Ulm (DE)**<br>• **Schmid, Joachim**<br>**89597 Munderkingen (DE)**<br>• **Schnabl, Gottfried, Dr.**<br>**89077 Ulm (DE)**<br>• **Schreyögg, Christoph, Dr.**<br>**89073 Ulm (DE)** |

(54) **Verfahren zur empfängerseitigen Bearbeitung eines Signals in einem CDMA Funkkommunikationssystem**

(57)     Die Erfindung betrifft ein Verfahren zur empfängerseitigen Bearbeitung eines in einem Empfänger eines CDMA Funkkommunikationssystems empfangenen Signals vorgegebener Länge (L), wobei im Empfänger ein Verzögerungsleistungsdichtespektrum des Signals umfassend eine Mehrzahl von Teilelementen bestimmt wird, und wobei jedes Teilelement ein Maß für die Stärke einer ab einem zu dem Teilelement korrespondierenden Anfangszeitpunkt empfangenen Signalfolge der vorgegebenen Länge (L) darstellt. Erfindungsgemäß werden zur Bearbeitung des empfangenen Signals eine Mehrzahl der Anfangszeitpunkte mindestens einem Block zugeordnet.

Weiterhin betrifft die Erfindung ein Verfahren zur Bestimmung eines Verzögerungsleistungsdichtespektrums eines Signals vorgegebener Länge (L). Erfindungsgemäß werden zur Bestimmung jedes Teilelementes ($\gamma_{A1}^{i}, \gamma_{A2}^{i}$) des Verzögerungsleistungsdichtespektrums ein oder mehrere Bestandteile (T1, T2, T3, T4, T5, T6) der jeweiligen Signalfolge herangezogen, wobei die Gesamtlänge als die Summe der Längen des oder der herangezogenen Bestandteile der jeweiligen Signalfolge kürzer als die vorgegebene Länge (L) ist.

## FIG 2

EP 1 422 831 A1

**Beschreibung**

Die Erfindung betrifft ein Verfahren zur empfängerseitigen Bearbeitung eines Signals vorgegebener Länge nach dem Oberbegriff des Anspruchs 1 und eine entsprechende empfangsseitige Einrichtung nach dem Oberbegriff des Anspruchs 17.

Ferner betrifft die Erfindung ein Verfahren zur Bestimmung eines Verzögerungsleitungsdichtespektrums eines empfangenen Signals vorgegebener Länge nach dem Oberbegriff des Anspruchs 11.

In Funkkommunikationssystemen werden Informationen (beispielsweise Sprache, Bildinformation, Videoinformation, SMS (Short Message Service) oder andere Daten) mit Hilfe von elektromagnetischen Wellen über eine Funkschnittstelle zwischen sendender und empfangender Station übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem umfasst hierbei Teilnehmerstationen, z.B. Mobilstationen, Basisstationen, z.B. Node B's, sowie weitere netzseitige Einrichtungen. Die Teilnehmerstationen und die Basisstationen sind in einem Funkkommunikationssystem über eine Funkschnittstelle miteinander verbunden.

Der Zugriff von Stationen auf die gemeinsamen Funkressourcen des Übertragungsmediums, wie zum Beispiel Zeit, Raum, Frequenz und Leistung wird bei Funk-Kommunikationssystemen durch Vielfachzugriffsverfahren (Multiple Access, MA) geregelt.

Einige Funkkommunikationssysteme der dritten Generation verwenden ein Codevielfachzugriffsverfahren (CDMA, Code Division Multiple Access). Ein Beispiel hierfür sind WCDMA Systeme (Wideband CDMA). Hierzu zählt die FDD-Komponente (FDD: Frequency Division Duplex) des UMTS-Standards (UMTS: Universal Mobile Telecommunications System) in Europa sowie das amerikanische cdma2000. WCDMA ist ein Zugangsverfahren für die Mobilfunkkommunikation, welches auf der Verwendung von mindestens zwei 5 MHz Frequenzbändern für die Übertragung in Aufwärts- sowie in Abwärtsrichtung (FDD Technologie) beruht.

Für zukünftige Mobilfunksysteme mit CDMA Übertragungsverfahren wie beispielsweise UMTS oder andere Systeme der 3. Generation sind für die Funkschnittstelle Frequenzen im Frequenzband von ca. 2000 MHz vorgesehen.

Bei Codebereichs-Vielfachzugriffsverfahren wird durch einen Spreizcode, der aus vielen einzelnen sogenannten Chips besteht, die zu übertragende Information stationsspezifisch codiert, wodurch die zu übertragende Leistung codebedingt über einen großen Frequenzbereich gespreizt wird. Die von unterschiedlichen Stationen benutzen Spreizcodes innerhalb einer Zelle sind jeweils gegenseitig orthogonal oder im wesentlichen orthogonal, wodurch ein Empfänger die ihm zugedachte Signalleistung erkennt und andere Signale unterdrückt. Durch CDMA wird die Funkressource Leistung somit durch Spreizcodes stationsspezifisch separiert.

Durch Streuung und Reflexion erfährt das von einem Sender transmittierte Signal Mehrwegeausbreitung. Im Empfänger ist jeder dieser Wege durch eine Pfadverzögerung charakterisiert. Der Empfang von CDMA Signalen bei Mehrwegeausbreitung kann mit einem Rake-Empfänger realisiert werden. Der Rake-Empfänger sammelt wie ein Rechen (englisch: rake) die Signalenergie der einzelnen Ausbreitungspfade ein und ermöglicht eine effektive Nutzung der Energie der Mehrwegeausbreitung. In jedem Rake-Finger wird die Pfadlaufzeit kompensiert und das Signal zurückgespreizt. Dies setzt voraus, dass im Empfänger die Spreizsequenz und die Pfadverzögerungen der einzelnen Pfade bekannt sind.

Bei UMTS FDD wird ein RACH (Random Access Channel) verwendet, um den Kanalaufbau einzuleiten. Dazu sendet die Mobilstation nach einem Slotted-Aloha-Protokoll, also zufällig zu Beginn eines Zeitrahmens, ein vordefiniertes Nachrichtenformat, bestehend aus einer Präambel, und nachfolgend einen Nachrichtenteil.

Unter einer Präambel, auch flag genannt, versteht man ein bei der digitalen Nachrichtenübertragung den Nutzdaten voran- , gegebenenfalls auch nachgestelltes, Feld mit charakteristischen Bitmustern zur Anzeige von bestimmten Informationen.

Die Präambel muss von der Basisstation detektiert werden. Sie enthält eine von 16 sogenannten Signaturen, welche Information zur Decodierung des nachfolgenden liefern. Eine Präambelsignatur besteht aus 256 Wiederholungen einer reellen Signatur aus einem Hadamard Code der Länge 16. Wird die Präambel von der Basisstation als solche erkannt, sendet sie eine positive Acquisition Indication. Daraufhin beginnt die Mobilstation mit dem Senden des Nachrichtenteils, der Message.

Der Empfänger der Präambel hat die Aufgabe, diese zu detektieren, d.h. festzustellen, dass er eine Präambel empfangen hat, und nach erfolgter Detektion den Kanal zu schätzen. Um ein RACH Signal in einem CDMA Funkkommunikationssystem zu verarbeiten, muss eine Korrelationseinheit das Eingangssignal über eine bestimmte vorgegebene Länge kohärent oder teilkohärent aufsummieren. Diese Länge entspricht üblicherweise der vorgegebenen Länge des Signals, welches detektiert werden soll. Die Summation erfolgt für eine Vielzahl von Zeitoffsets zwischen der Basisstation und der Mobilstation, da die Signallaufzeit zwischen der sendenden und der empfangenden Station nicht bekannt ist. Die zeitlich geordneten und quadrierten Summationsergebnisse entsprechen dem Verzögerungsleistungsdichtespektrum des Signals. Dieses besteht also aus einer Vielzahl von Teilelementen, wobei jedes Teilelement das Summationsergebnis einer ab einem bestimmten Zeitpunkt empfangenen Signalfolge der vorgegebenen Länge darstellt. Unter einer Signalfolge wird dabei ein Signal der vorgegebenen Länge verstanden, welches ab einem bestimmten Zeitpunkt empfangen wurde. Eine Signalfolge kann also mit dem gesendeten Signal, z.B. der Präambel, übereinstimmen, oder Teile des gesendeten Signals enthalten. Im Extremfall enthält eine folge aber auch keine Bits des gesendeten Signals. Jedes Teilelement des Verzögerungsleistungsdichtespektrums stellt somit ein Maß für die Stärke einer ab dem jeweiligen Zeitpunkt empfangenen Signalfolge dar. An den Maxima des Verzögerungsleistungsdichtespektrums können daher die Pfade mit maximaler Signalenergie erkannt werden. Der Rake-Empfänger benutzt das Verzögerungsleistungsdichtespektrum zur Decodierung des Nachrichtenteils.

Üblicherweise werden in einem Empfänger die Teilelemente mit den größten Signalstärken herausgesucht und mit einer Detektionsschwelle verglichen. Wird der Schwellenwert überschritten, gilt ein Signal als detektiert, und die nachfolgende Bearbeitung des Nachrichtenteils wird eingeleitet. Aufgrund der kurzen Präambeldauer ist die Fehlalarmwahrscheinlichkeit bei diesem Verfahren relativ hoch. Außerdem ist der Aufwand für die Verarbeitung nicht gesendeter Signale groß, da alle Schritte des Sortierens und des Vergleichs mit dem Schwellenwert für alle Teilelemente durchgeführt werden, unabhängig davon, ob das Signal später als detektiert oder nicht detektiert gewertet wird.

In Basisstationen für CDMA Systeme wirkt sich die Verwendung von mehreren Antennen durch die damit verbundene Erhöhung des Störabstandes direkt kapazitätssteigernd aus. Auch bei der Detektion von RACH Signalen können diese Antennen zur verbesserten Detektion verwendet werden. Als Möglichkeiten für den Einsatz mehrerer Antennen können Antennenarrays, mit welchen Strahlformung durchgeführt wird, und Diversitätsantennen, d.h. Antennen mit einem charakteristischen Abstand, genannt werden.

Während der relativ kurzen Signaldauer eines RACH Signals, welche typischerweise etwa 1 ms beträgt, kann bei geringer oder verschwindender Bewegungsgeschwindigkeit der Mobilstation eine unterschiedliche Signalstärke von verschiedenen Antennen eines Empfängers empfangen werden. Daher kann im Mittel der Störabstand verringert werden, wenn in allen Antennen nach der Signalstärke gesucht wird. Dazu werden üblicherweise für Diversitätsantennen die Verzögerungsleistungsdichtespektren der Antennen unabhängig voneinander betrachtet und/oder vor der Auswahl der Maxima durch Aufaddieren in ein einziges Verzögerungsleistungsdichtespektrum überführt. Für Antennenarrays erzeugt man keulenförmige Antennencharakteristiken durch gewichtete Summation der aufsummierten Antennensignale mit jeweils gleicher Verzögerung, d.h. der Teilelemente. Danach kann man aus den quadrierten Summensignalen für jede Antennenkeule ein Verzögerungsleistungsdichtespektrum bilden.

Der mit der Verwendung von mehreren Antennen verbundene Aufwand bezüglich der Ermittlung der Verzögerungsleistungsdichtespektren steigt üblicherweise proportional mit der Anzahl der Antennen. Da die Hardware schon für eine Antenne sehr aufwendig ist, wäre es wünschenswert, eine Korrelationseinheit für die Gewinnung der Verzögerungsleistungsdichtespektren mehrerer Antennen einsetzen zu können.

Bezüglich der Weiterbearbeitung des Verzögerungsleistungsdichtespektrums wäre ein Verfahren wünschenswert, welches wenig aufwendig ist, um die Kapazität des empfängerseitigen Systems nicht bis an die Grenzen der Leistungsfähigkeit oder sogar über diese hinaus zu beanspruchen. Außerdem sollte aufgrund relativ kurzer Signaldauern ein robustes Verfahren gefunden werden, welches eine günstige Empfängercharakteristik aufweist, um eine etwaige Nachverarbeitung auf Signalprozessoren und die erforderliche zu übertragende Datenrate so gering wie möglich zu halten.

Der Erfindung liegt die Aufgabe zugrunde, ein Verfahren der eingangs genannten Art aufzuzeigen, welches eine effiziente empfängerseitige Bearbeitung eines Signals in einem CDMA Funkkommunikationssystem ermöglicht. Insbesondere soll einerseits eine effiziente Ermittlung eines Leistungsdichtespektrums eines Signals vorgegebener Länge und andererseits bei erfolgter Ermittlung eine effiziente Weiterbearbeitung eines Leistungsdichtespektrums eines Signals vorgegebener Länge zur Verfügung gestellt werden. Weiterhin soll eine Einrichtung der eingangs genannten Art aufgezeigt werden, welche eine solche effiziente Weiterbearbeitung eines Leistungsdichtespektrums eines Signals vorgegebener Länge erlaubt.

Die Aufgabe wird für das Verfahren durch ein Verfahren mit den Merkmalen des Anspruchs 1 gelöst.

Ausgestaltungen und Weiterbildungen sind Gegenstand der Unteransprüche.

In dem Verfahren zur empfängerseitigen Bearbeitung eines in einem Empfänger eines CDMA Funkkommunikationssystems empfangenen Signals vorgegebener Länge, wobei im Empfänger ein Verzögerungsleistungsdichtespektrum des Signals umfassend eine Mehrzahl von Teilelementen bestimmt wird, und wobei jedes Teilelement ein Maß für die Stärke einer ab einem zu dem Teilelement korrespondierenden Anfangszeitpunkt empfangenen Signalfolge der vorgegebenen Länge darstellt, werden erfindungsgemäß zur Bearbeitung des empfangenen Signals eine Mehrzahl der Anfangszeitpunkte mindestens einem Block zugeordnet.

Angewandt auf die Detektion eines Signals hat das Verfahren den Vorteil, dass die Detektion aufgrund einer Senkung der Schätzvarianz robuster und weniger aufwendig wird, da die Anzahl auszuwertender Blöcke geringer als die Anzahl an Teilelementen ist. Die Anzahl der Blöcke kann beliebig gewählt werden, so dass der Verlust an Pfadenergie, welcher durch die Blockbildung im Vergleich zur Betrachtung der einzelnen Teilelemente auftreten kann, durch eine geeignete Wahl der Blöcke gering gehalten wird.

Unter einer Signalfolge der vorgegebenen Länge wird ein Signal verstanden, welches die gleiche Länge wie das zu bearbeitende Signal aufweist. Handelt es sich bei dem zu bearbeitenden Signal z.B. um eine Präambel einer bestimmten Länge, so kann eine Signalfolge inhaltlich mit der Präambel übereinstimmen, sie kann zusammenhängende Teile des Inhaltes der Präambel an ihrem Anfang oder ihrem Ende aufweisen, oder sie kann auch keinen Teil der Präambel enthalten. In dem Fall, dass keine Präambel zum Empfänger gesendet wurde, und der Empfänger dennoch überprüft, ob er eine Präambel empfangen hat, bestehen die Signalfolgen z.B. aus Rauschsignalen. Die Länge der Signalfolgen entsprechen dann der Länge der Präambel, deren Empfang der Empfänger zu detektieren versucht.

Erfindungsgemäß werden Anfangszeitpunkte einem oder mehreren Blöcken zugeordnet. Da die Anfangszeitpunkte zu Teilelementen korrespondieren, findet somit indirekt eine Zuordnung von Teilelementen zu einem oder mehreren Blöcken statt.

In einer Weiterbildung der Erfindung wird aus den zu den jedem Block zugeordneten Anfangszeitpunkten korrespondierenden Teilelementen jeweils ein Blockteilelement gebildet. Die Teilelemente, welche wie oben beschrieben indirekt zu einem oder mehreren Blöcken zugeordnet wurden, werden gemäß einer Rechenvorschrift zu einem oder mehreren Blockteilelementen verrechnet. Hierbei können verschiedene Rechenvorschriften zum Einsatz kommen.

Einer Ausgestaltung der Erfindung zufolge wird bei Verwendung einer Mehrzahl von Blöcken mindestens ein Anfangszeitpunkt mindestens zwei Blöcken zugeordnet. Dies entspricht einer Überlappung der Blöcke. Hierdurch kann vermieden werden, dass die Hauptenergie des Signals sich zu etwa gleich großen Teilen auf zwei Blöcke aufteilt.

Vorzugsweise handelt es sich bei der Bearbeitung des empfangenen Signals um eine Entscheidung über den Empfang einer zum Empfänger gesendeten Präambel und gegebenenfalls um die Ermittlung des Inhaltes einer zum Empfänger gesendeten Präambel. Der Empfänger muss hierbei also entscheiden, ob er eine Präambel empfangen hat, d.h. diese detektieren, und gegebenenfalls eine Entscheidung über den Inhalt der Präambel treffen.

In einer Ausgestaltung der Erfindung ist die Präambel Bestandteil eines Zufallszugriffs auf einem Zufallszugriffskanal. Diese Art von Kanälen wird üblicherweise als Random Access Channel (RACH) bezeichnet.

In Weiterbildung der Erfindung wird die Mehrzahl der dem mindestens einen Block zugeordneten Anfangszeitpunkte aus Anfangszeitpunkten gebildet, welche zu solchen Teilelementen korrespondieren, welche einen ersten Schwellenwert übertreffen. Dem oder den Blöcken sind somit nur solche Teilelemente indirekt zugeordnet, welche einen ersten Schwellenwert übertreffen.

Vorteilhafterweise wird jedes Blockteilelement mit einem zweiten Schwellenwert verglichen. Es kann auch ein Vergleich der Blockteilelemente mit einer Mehrzahl von Schwellenwerten durchgeführt werden.

Gemäß einer Ausgestaltung der Erfindung werden in Abhängigkeit von dem Ergebnis des Vergleichs mit dem zweiten Schwellenwert Teilelemente mit einem dritten Schwellenwert verglichen und in Abhängigkeit von dem Ergebnis des Vergleichs mit dem dritten Schwellenwert wird mindestens ein Blockteilelement mit einem vierten Schwellenwert verglichen. Beispielsweise können somit die Blöcke, welche sich aufgrund des Vergleichs mit dem zweiten Schwellenwert als geeignet erwiesen haben, erneut oder zum ersten Mal bezüglich ihrer Teilelemente genauer untersucht werden. Im weiteren Verlauf können dann z.B. nur noch Blöcke betrachtet werden, deren Teilelemente in geeigneter Weise die dritte Schwelle übertroffen haben. Diese Blöcke werden einem weiteren Vergleich mit einer vierten Schwelle unterzogen. Dieses kaskadenartige Vorgehen kann bei Bedarf in Kombination mit der Verwendung des ersten Schwellenwertes beliebig oft wiederholt werden. Von Vorteil ist es z.B., den Vergleich mit der zweiten Schwelle zuerst ohne Verwendung des ersten Schwellenwertes durchzuführen. Dies würde einen geringen Aufwand bedeuten und zu einem groben Ergebnis führen. Fällt dieses Ergebnis derartig aus, dass eine genauere Untersuchung von Vorteil zu sein scheint, so kann dann ein Vergleich von geeigneten oder allen Teilelementen mit der dritten Schwelle und ein Vergleich von einem oder mehreren Blöcken mit der vierten Schwelle durchgeführt werden. Somit kann die Genauigkeit des Ergebnisses erheblich gesteigert werden. Insgesamt wird somit eine Grobdetektion mit geringem Aufwand in Verbindung mit einer feineren Detektion bei einem positiven Ergebnis der Grobdetektion erreicht werden. Vorteilhafterweise werden hierbei Teilelemente und/oder Blöcke, welche einen Schwellenwert überschreiten, der Größe nach sortiert. Nach dem Vergleich mit dem ersten und/oder dem zweiten und/oder dem vierten Schwellenwert ist es möglich, die Blöcke neu zu strukturieren, d.h. eine neue Zuordnung von Anfangszeitpunkten zu Blöcken vorzunehmen. Durch eine Zuordnung zu kleineren Blöcken kann dann ein feiner aufgelöstes Ergebnis erreicht werden.

Vorzugsweise wird in Abhängigkeit von dem Ergebnis des Vergleichs mit dem zweiten und/oder dem dritten und/oder dem vierten Schwellenwert das empfangene Signal als an den Empfänger gesendetes Signal gewertet. Dies entspricht einer Detektion eines an den Empfänger gesandten Signals.

In einer Weiterbildung der Erfindung wird bei einer Wertung als gesendetes Signal in Abhängigkeit von dem Ergebnis des Vergleichs mit dem zweiten und/oder dem dritten und/oder dem vierten Schwellenwert ein Sendezeitpunkt ermittelt. Die einzelnen Teilelemente korrespondieren zu Anfangszeitpunkten des Empfangs. Daher können bei Bestimmung der Anfangszeitpunkte mit der höchsten Signalenergie Rückschlüsse über die Zeitdifferenz zwischen dem Senden und dem Empfang des Signals, und somit über den Sendezeitpunkt des Signals gezogen werden. Die Ermittlung des Sendezeitpunktes erweist sich als vorteilhaft für die Verarbeitung der folgenden Signale, welche von dem gleichen Sender stammen.

In einer Ausgestaltung oder alternativen Variante des erfindungsgemäßen Verfahrens werden zur Bestimmung jedes Teilelementes des Verzögerungsleistungsdichtespektrums ein oder mehrere Bestandteile der jeweiligen Signalfolge herangezogen, wobei die Gesamtlänge als die Summe der Längen des oder der herangezogenen Bestandteile der jeweiligen Signalfolge kürzer als die vorgegebene Länge ist.

Dadurch, dass für die Ermittlung von jedem Teilelement des Verzögerungsleistungsdichtespektrums einer Antenne nicht die ganze jeweilige Signalfolge verwendet wird, können die nicht genutzten Teile der Signalfolge z.B. von anderen Antennen zur Bestimmung ihres Verzögerungsleistungsdichtespektrums eingesetzt werden. Somit ergibt sich bezüglich des Volumens der benötigten Hardware dasjenige, welches einer einzigen Antenne entspricht, während gleichzeitig der Diversitäts- und räumliche Gewinn mehrerer Antennen ausgenutzt werden kann. Hierbei ist die verwendete Menge an Hardware beliebig skalierbar. Um die Leistungsfähigkeit der Detektion eines Signals zu steigern, kann also der Aufwand an Hardware beliebig angepasst werden. Sowohl die Größe der einzelnen Bestandteile als auch die Gesamtlänge des oder der Bestandteile ist frei wählbar, so dass die Genauigkeit des Verzögerungsleistungsdichtespektrums an die jeweiligen Erfordernisse angepasst werden kann.

In einer Ausgestaltung der Erfindung unterscheidet sich für mindestens ein Teilelement das oder die zur Bestimmung herangezogenen Bestandteile von dem oder den zur Bestimmung von mindestens einem weiteren Teilelement herangezogenen Bestandteile. Ein Beispiel für diese Ausgestaltung wäre die Verwendung der ersten Hälfte einer Signalfolge für das erste Teilelement und die Verwendung des ersten Drittels einer Signalfolge für das zweite Teilelement. Für die folgenden Teilelemente können dann entweder wieder die erste Hälfte oder das erste Drittel oder auch andere Bestandteile gewählt werden. Werden verschiedene Bestandteile zur Bestimmung von Teilelementen eingesetzt, so können zur Betrachtung des gesamten Verzögerungsleistungsdichtespektrums Wichtungsfaktoren für die Teilelemente eingesetzt werden.

Mit Vorteil wird das Verfahren auf einen Empfänger mit einer Mehrzahl von Empfangsantennen angewendet, welche das Signal vorgegebener Länge empfangen. Hierbei kommen sowohl Antennenarrays als auch Diversitätsantennen in Betracht. Somit können mehrere räumliche Sektoren auf einer Korrelationseinheit verarbeitet werden.

In einer bevorzugten Ausführungsform der Erfindung wird für jede Empfangsantenne ein Verzögerungsleistungsdichtespektrum des Signals vorgegebener Länge bestimmt. Dies bedeutet, dass das erfindungsgemäße Verfahren auf jede Antenne angewandt wird. Die weitere Bearbeitung der Verzögerungsleistungsdichtespektren der einzelnen Antenne kann nach verschiedenen Verfahren erfolgen. Beispielsweise können die dem Stand der Technik entsprechenden Verfahren oder auch das erfindungsgemäße Verfahren der Blockbildung angewandt werden.

Einer Ausgestaltung der Erfindung zufolge entspricht die Summe der Gesamtlängen der von der Mehrzahl von Empfangsantennen zur Bestimmung von mindestens einem Teilelement herangezogenen Bestandteile der jeweiligen Signalfolge der vorgegebenen Länge. In diesem Fall teilen die Antennen sich die jeweilige Signalfolge also auf. Setzt man die von den verschiedenen Antennen verwendeten Bestandteile zusammen, erhält man die jeweilige Signalfolge. Hierbei wird die zeitliche Länge des Signals in der Korrelationseinheit vollständig genutzt. Dadurch wird der meist sehr kurze Beobachtungszeitraum des Signals nicht weiter verringert. Es ist auch möglich, dass die Summe der Gesamtlängen der von der Mehrzahl von Empfangsantennen zur Bestimmung von mindestens einem Teilelement herangezogenen Bestandteile die vorgegebene Länge übertrifft. Dies entspricht einer Überlappung der von verschiedenen Antennen verwendeten Bestandteile. Eine derartige Überlappung muss von der Hardware unterstützt werden, indem eine parallele Verarbeitung von Bestandteilen oder eine Speicherung von Signalfolgen möglich ist. Der Aufwand an Hardware steigt mit zunehmender Überlappung der von verschiedenen Antennen verwendeten Bestandteile.

Vorteilhafterweise wird aus den Verzögerungsleistungsdichtespektren der Empfangsantennen mindestens ein gemeinsames Verzögerungsleistungsdichtespektrum ermittelt. Dies kann z.B. durch eine einfache oder gewichtete Addition der Teilelemente der einzelnen Antennen erfolgen.

Das Verfahren wird mit Vorteil auf ein FDD System, wie z.B. UMTS FDD angewandt.

Die oben genannte Aufgabe wird hinsichtlich der Einrichtung durch eine Einrichtung mit den Merkmalen des Anspruchs 17 gelöst. Erfindungsgemäß weist diese Einrichtung Mittel zum Zuordnen einer Mehrzahl von Anfangszeitpunkten zu mindestens einem Block auf. Mittel und Einrichtungen zur Durchführung der Verfahrensschritte gemäß den Ausgestaltungen und Weiterbildungen der Erfindung können vorgesehen sein.

Einzelheiten und Details der Erfindung werden anhand eines Ausführungsbeispiels erläutert. Dabei zeigen

Figur 1:    ein Funkkommunikationssystem,

Figur 2:    eine erste schematische Aufteilung eines empfangenen Signals in Bestandteile,

Figur 3: eine zweite schematische Aufteilung eines empfangenen Signals in Bestandteile,

Figur 4: eine dritte schematische Aufteilung eines empfangenen Signals in Bestandteile,

Figur 5: eine Zuordnung von Anfangszeitpunkten zu Blöcken,

Figur 6: ein Flussdiagramm eines erfindungsgemäßen Verfahrens.

Das Ausführungsbeispiel bezieht sich auf ein UMTS FDD System. Für den Verbindungsaufbau zwischen der Mobilstation und der Basisstation ist hierbei ein RACH vorgesehen. Die Mobilstation sendet unter Verwendung von einer von 16 verschiedenen Signaturen eine Präambel aus. Die Präambel Signaturen bestehen aus 256 Wiederholungen einer reellen Signatur aus dem Hadamard-Code-Set der Länge 16.

Im Empfänger wird das zu einem Zeitpunkt i empfangene Signalfolge demoduliert, mit dem für die Präambel verwendeten Scrambling Code multipliziert und mit einem Hadamard Code der Länge 16 Chips korreliert, um so die Korrelation $x_l$ für die l-te Wiederholung der reellen Signatur aus dem Hadamard-Code-Set der Länge 16 zu erhalten, wobei der Index 1 die Anzahl der Wiederholungen nummeriert. Bei der kohärenten Akkumulation berechnet sich ein Teilelement $\gamma^i$ des Verzögerungsleistungsdichtespektrums als Betragsquadrat aus der Summe der Korrelationen über alle 256 Wiederholungen:

$$\gamma^i = \left| \sum_{l=0}^{255} x_l \right|^2$$

Der Index i steht hierbei für einen diskreten Zeitpunkt. Da die Signallaufzeit zischen der sendenden und der empfangenden Station nicht bekannt ist, werden die Teilelemente über ein Fenster einer bestimmten Chipbreite berechnet. Die Breite ist z.B. über den maximal möglichen Zellradius bestimmbar.

Obige Formel stellt eine Möglichkeit zur Berechnung der Teilelemente $\gamma^i$ dar. Es können auch andere Berechnungen zur Bestimmung der Teilelemente durchgeführt werden.

Die Menge der für alle Zeitpunkte i berechneten Teilelemente stellt das Verzögerungsleistungsdichtespektrum der Präambel für die empfangende Antenne dar.

Werden bei der Verwendung einer Mehrzahl von Antennen die Teilelemente wie beschrieben für jede Antenne bestimmt, so muss für jede Antenne eine eigene Korrelationseinheit zur Durchführung der Rechnungen vorliegen. Erfindungsgemäß kommt daher, um den Hardware Aufwand zu reduzieren, eine verändertes Verfahren zur Bestimmung des Verzögerungsleistungsdichtespektrums einer Antenne zum Einsatz. Für jedes Teilelement des Verzögerungsleistungsdichtespektrums wird die Korrelationseinheit über dem Signal blockweise eingesetzt.

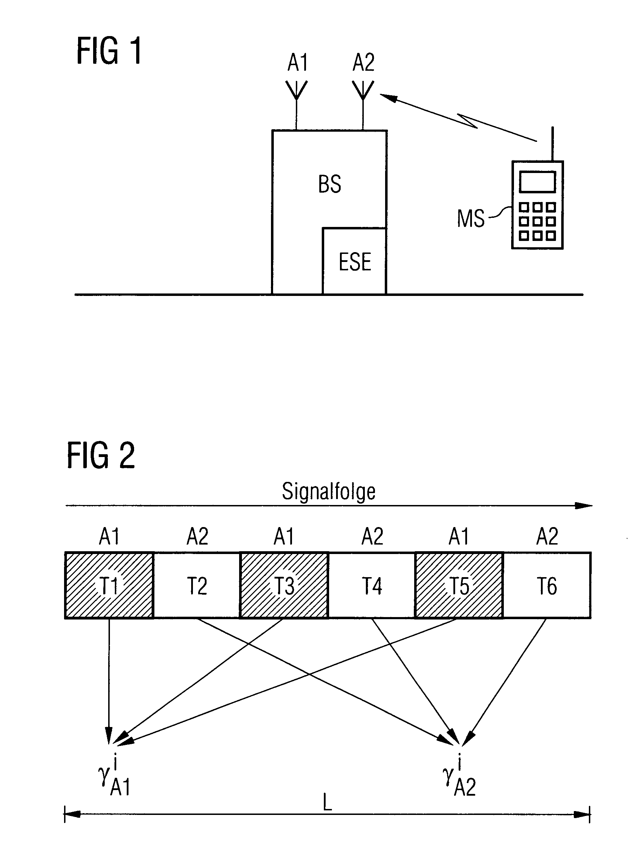

Figur 1 stellt einen Empfänger BS eines UMTS FDD Funkkommunikationssystems dar, welcher zwei Diverstitätsantennen A1 und A2 aufweist. Eine Präambel, die von einer Mobilstation MS an den Empfänger BS gesendet wird, wird von beiden Antennen A1 und A2 empfangen. Eine empfangsseitige Einrichtung (ESE) bearbeitet Verzögerungsleistungsdichtespektren von Signalen wie z.B. der Präambel.

Figur 2 verdeutlicht das Vorgehen für die zwei Diversitätsantennen A1 und A2. Die Signalfolge der Länge L der Präambel, welche ab dem Zeitpunkt i empfangen wurde, wird in diesem Beispiel in sechs gleich große Bestandteile T1, T2, T3, T4, T5 und T6 aufgeteilt. Die erste Antenne A1 verwendet die Bestandteile T1, T3 und T5 zur Bestimmung des Teilelementes $\gamma_{A1}^i$, während die zweite Antenne A2 die Bestandteile T2, T4 und T6 zur Bestimmung des Teilelementes $\gamma_{A2}^i$ einsetzt. Über diejenigen Bestandteile des Signals, welche zur Bestimmung eines Teilelementes verwendet werden, wird gemäß obiger Formel summiert. Die Gesamtlänge der für die Antenne A1 verwendeten Bestandteile ist die Summe aus den Längen der Bestandteile T1, T3 und T5. Erfindungsgemäß ist diese Gesamtlänge kürzer als die Länge L der Präambel, welche der Summe aus den Längen der Bestandteileelemente T1, T2, T3, T4, T5 und T6 entspricht. Entsprechendes gilt für die von der Antenne A2 herangezogenen Bestandteile, so dass die Gesamtlänge der für die Antenne A2 verwendeten Bestandteile als die Summe aus den Längen der Bestandteile T2, T4 und T6 kürzer als die Länge L der Präambel ist.

In dem Beispiel der Figur 2 ergibt eine Summation der Gesamtlänge der von der ersten Antenne A1 verwendeten Bestandteile und der Gesamtlänge der von der zweiten Antenne A2 verwendeten Bestandteile die Länge der Präambel. Es ist jedoch auch möglich, dass diese Summe die Länge der Präambel überschreitet. In diesem Fall überlappen sich die verschiedenen Teile. Zur Verarbeitung sich gegenseitig überlappender oder gar übereinstimmender Teile für verschiedene Antennen muss eine Parallelverarbeitung in Form mehrerer Korrelationseinheiten oder eine Speicherung der empfangenen Signalfolgen möglich sein. In diesem Fall können verschiedene Antennen auch gleiche Bestandteile des Signals zur Bestimmung eines Teilelementes verwenden.

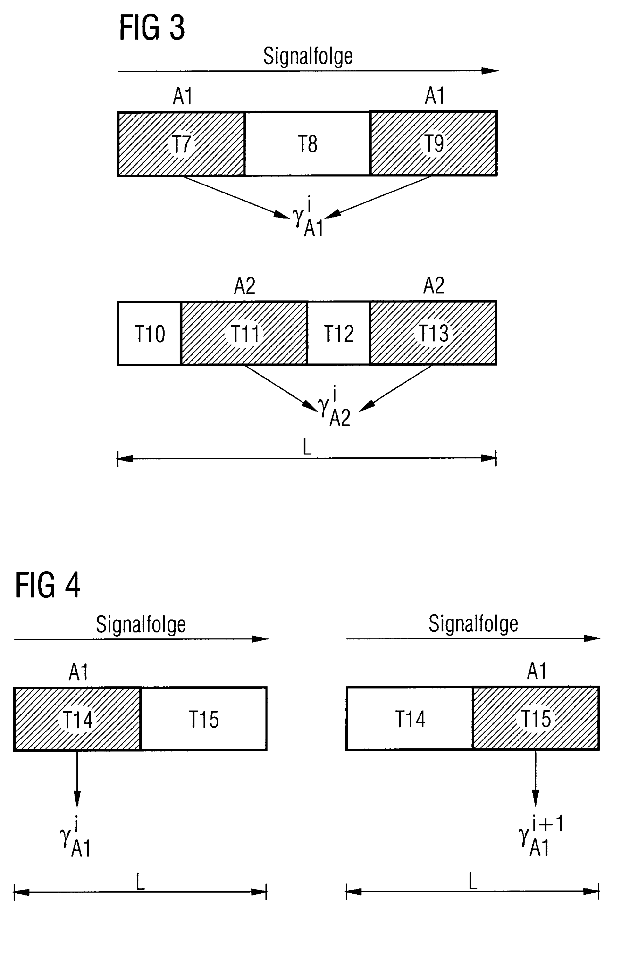

Figur 3 stellt den Fall sich überlappender Bestandteile für verschiedene Antennen dar. Der obere Balken zeigt die Aufteilung der Signalfolge in die Bestandteile T7, T8 und T9 für die erste Antenne A1. Diese zieht die Bestandteile T7 und T9 zur Bestimmung des Teilelementes $\gamma_{A1}^{j}$ heran. Der untere Balken verdeutlicht die Aufteilung der Signalfolge in die Bestandteile T10, T11, T12 und T13 für die zweite Antenne A2. Die zweite Antenne A2 setzt die Bestandteile T11 und T13 zur Bestimmung des Teilelementes $\gamma_{A2}^{j}$ ein. Die Bestandteile T7 und T11 überlappen sich, die Bestandteile T9 und T13 stimmen überein.

Die von einer Antenne herangezogenen Bestandteile können sich für verschiedene Teilelemente unterscheiden. Figur 4 stellt eine Aufteilung von Signalfolgen der vorgegebenen Länge L für zwei aufeinanderfolgende Anfangszeitpunkte i und i+1 in die Bestandteile T14 und T15 dar. Für das Teilelement $\gamma_{A1}^{j}$ verwendet die erste Antenne A1 den Bestandteil T14, für das darauffolgende Teilelement $\gamma_{A1}^{j+1}$ zieht sie den Bestanteil T15 heran. Es ist auch möglich, dass sich nicht nur die herangezogenen Bestandteile, sondern auch die Aufteilung der Signalfolge in Bestandteile ändert, so dass z. B. die Teilelemente T14 und T15 dann für verschiedene Signalfolgen unterschiedlich lang sind oder eine Aufteilung in eine unterschiedliche Anzahl von Teilelementen für verschiedene Signalfolgen erfolgt.

Die Länge und Anzahl der Bestandteile kann beliebig gewählt werden. Bei dem Einsatz von Antennenarrays mit mehr als zwei Antennen wird das Signal zur Bestimmung eines Teilelementes auf mehrere Antennen aufgeteilt. Nach der Ermittlung der einzelnen Teilelemente für die verschiedenen Antennen eines Antennenarrays können diese unter Berücksichtigung von Gewichtungsvektoren, sogenannten Steering-Vektoren, summiert werden, um Leistungsdichtespektren für verschiedene Antennenkeulen zu erhalten.

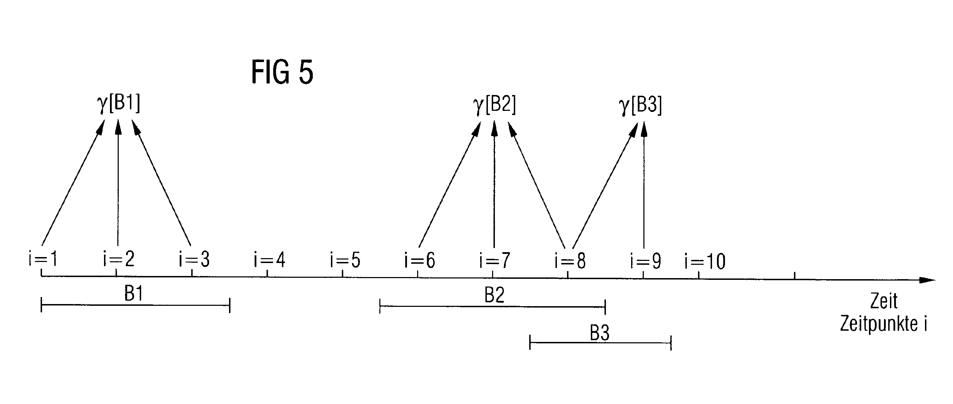

Die Weiterverarbeitung des oder der ermittelten Verzögerungsleistungsdichtespektren kann durch eine Zuordnung einer Mehrzahl von Anfangszeitpunkten zu Blöcken geschehen. Figur 5 zeigt beispielhaft eine Zuordnung von Anfangszeitpunkten zu Blöcken. Nach rechts ist in Figur 5 die Zeit aufgetragen. Zur Vereinfachung wird angenommen, dass zehn Teilelemente $\gamma^{i}$ korrespondierend zu den Anfangszeitpunkten i=1 bis i=10 bestimmt wurden. Ein erster Block B1 umfasst die Anfangszeitpunkte i=1, i=2 und i=3. Ein zweiter Block B2 umfasst die Anfangszeitpunkte i=6, i=7 und i=8, während ein dritter Block B3 die Anfangszeitpunkte i=8 und i=9 umfasst. Der Anfangszeitpunkt i=8 ist damit den zwei Blöcken B2 und B3 zugeordnet. Die Anfangszeitpunkte i=4, i=5 und i=10 wurden keinem der Blöcke zugeordnet. Aus den Teilelementen $\gamma^{i}$ mit i=1, i=2 und i=3 wird dann ein Blockteilelement $\gamma[B1]$ berechnet. Entsprechend wird aus den Teilelementen $\gamma^{i}$ mit i=6, i=7 und i=8 ein Blockteilelement $\gamma[B2]$ und aus den Teilelementen $\gamma^{i}$ mit i=8 und i=9 ein Blockteilelement $\gamma[B3]$ bestimmt. Die Berechung der Blockteilelemente können z. B. gemäß folgender Formel erfolgen:

$$\gamma[Bj] = \sum_{i=i_A}^{i=i_E} \left| \gamma^{i} \right|^{2}.$$

Der Index j steht hierbei für die Nummer des Blocks. Weiterhin ist $i_A$ der erste dem Block zugeordnete Anfangszeitpunkt, $i_E$ der letzte. Es wird also die Summe über die Betragsquadrate der Teilelemente, deren Anfangszeitpunkte dem jeweiligen Block zugeordnet wurden, gebildet. Auch die Verwendung anderer Rechenvorschriften zur Berechnung der Größe $\gamma[Bj]$ aus den zugeordneten $\gamma^{i}$ ist möglich.

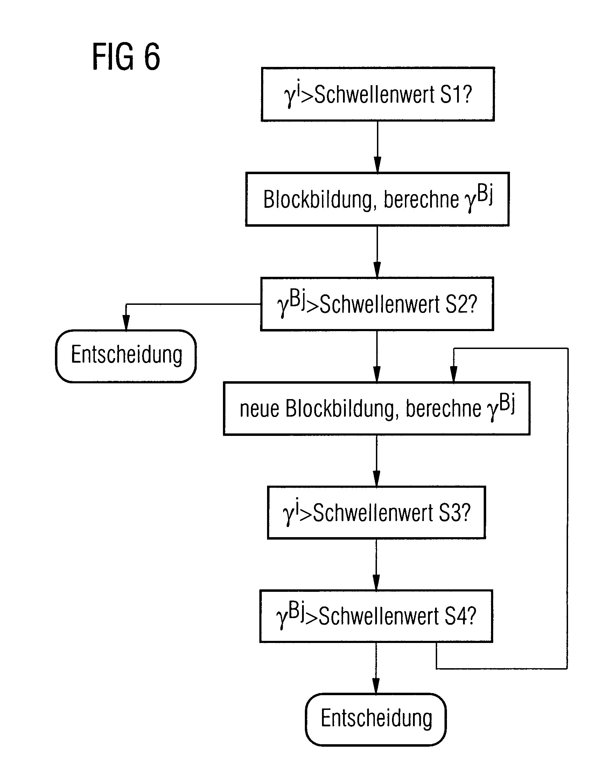

Dem Empfänger stellt sich die Aufgabe, zu entscheiden, ob das Signal, dessen Verzögerungsleistungsdichtespektrum ermittelt wurde, eine Präambel darstellt. Figur 6 zeigt ein Flussdiagramm eines erfindungsgemäßen Verfahrens zur Detektion einer Präambel.

Die Teilelemente $\gamma^{i}$ für alle Anfangszeitpunkte werden mit einem ersten Schwellenwert S1 verglichen. Diejenigen der Teilelemente $\gamma^{i}$, welche die erste Schwelle S1 überschreiten, werden in geeigneter Weise Blöcken zugeordnet. Die Blöcke umfassen also nur Anfangszeitpunkte, deren Teilelemente das Kriterium des Überschreitens des ersten Schwellenwertes erfüllt haben. Daraufhin können die Blockteilelemente $\gamma[Bj]$ bestimmt werden. Der Schritt des Vergleichens mit dem ersten Schwellenwert kann jedoch auch ausgelassen werden, so dass ohne vorhergehende Überprüfung der Teilelemente eine Blockbildung erfolgt.

Weiterhin werden die Blockteilelemente $\gamma[Bj]$ mit einem zweiten Schwellenwert S2 verglichen. Dieser Schwellenwert kann sich z.B. aus dem Mittelwert aus allen Blöcken einer Signatur ergeben. Überschreitet eines oder mehrere der Blockteilelemente den zweiten Schwellenwert S2, so kann die Präambel in einem Entscheidungsschritt als detektiert eingestuft werden. Entsprechend kann bei fehlendem Überschreiten der zweiten Schwelle S2 gefolgert werden, dass keine Präambel empfangen wurde.

Um eine genauere Detektion der Präambel zu ermöglichen, kann eine erneute Blockbildung stattfinden. Hierbei können z.B. diejenigen Blöcke, welche hohe Werte der Blockteilelemente aufweisen, feiner untergliedert werden. Dies entspricht einer genaueren Auflösung der Granularität in der Zeit. Die Blöcke können jedoch auch unverändert in die folgenden Rechenschritte übernommen werden.

Daraufhin werden geeignete Teilelemente $\gamma^{i}$ einem Vergleich mit einem dritten Schwellenwert S3 unterzogen. Von besonderem Interesse sind hierbei diejenigen Teilelemente der Blockteilelemente, welche den zweiten Schwellenwert S2 überschritten haben.

Die beiden Verfahrensschritte der Neubildung der Blöcke und des Vergleichs mit dem dritten Schwellenwert S3 können auch in umgekehrter Reihenfolge ablaufen. In diesem Fall kann die Neubildung der Blöcke von dem Ergebnis des Vergleichs mit dem dritten Schwellenwert S3 abhängig gemacht werden. Dies kann ähnlich zur Blockbildung nach dem Vergleich mit dem ersten Schwellenwert S1 durchgeführt werden.

Weiterhin werden geeignete Blockteilelemente $\gamma[Bj]$ mit einem vierten Schwellenwert S4 verglichen. Die Auswahl der zu vergleichenden Blockteilelemente $\gamma[Bj]$ erfolgt in Abhängigkeit von dem Vergleich mit dem dritten Schwellenwert S3. Daraufhin kann in ähnlicher Weise wie nach dem Vergleich mit dem zweiten Schwellenwert S2 eine Entscheidung über die Detektion der Präambel getroffen werden, oder das Verfahren mit einer erneuten Blockbildung fortgesetzt werden. Wird das Verfahren mit einer erneuten Blockbildung fortgesetzt, so können auch die Werte für die folgenden Schwellenwertvergleiche modifiziert werden.

Insgesamt ergibt sich so ein kaskadenartiges Verfahren, durch welches die Zuverlässigkeit der Detektion bei zunehmender Anzahl von Verfahrensschritten, d.h. Schwellenwertvergleichen, gesteigert wird. Es ist somit möglich, rasch ohne allzu großen Rechenaufwand zu einem groben Detektionsergebnis zu gelangen. Fällt dieses Ergebnis positiv aus, kann eine genauere Betrachtung unter Verwendung weiterer Schwellenwerte und gegebenenfalls einer erneuten Blockbildung durchgeführt werden. Der Aufwand und somit die Genauigkeit des Verfahrens kann durch die Art der Blockbildung und die Höhe und Anzahl der Schwellen beliebig modifiziert werden.

Das beschriebene Verfahren wird für alle für die Präambel zur Verfügung stehenden Signaturen durchgeführt. Somit ergibt das erfindungsgemäße Verfahren sowohl eine Entscheidung darüber, ob eine Präambel empfangen wurde, als auch über den Inhalt der empfangenen Präambel.

Nach Bestimmung des Blocks, welcher der Signalfolge mit dem höchsten Empfangspegel entspricht, können Rückschlüsse über den Sendezeitpunkt der Präambel gezogen werden. Diese Information ist für die Auswertung der folgenden von der Mobilstation zu sendenden Signale von großer Bedeutung.

**Patentansprüche**

1. Verfahren zur empfängerseitigen Bearbeitung eines in einem Empfänger (BS) eines CDMA Funkkommunikationssystems empfangenen Signals vorgegebener Länge (L),
wobei im Empfänger (BS) ein Verzögerungsleistungsdichtespektrum des Signals umfassend eine Mehrzahl von Teilelementen ($\gamma^i$) bestimmt wird, und wobei jedes Teilelement ($\gamma^i$) ein Maß für die Stärke einer ab einem zu dem Teilelement ($\gamma^i$) korrespondierenden Anfangszeitpunkt (i) empfangenen Signalfolge der vorgegebenen Länge (L) darstellt,
**dadurch gekennzeichnet,**
**dass** zur Bearbeitung des empfangenen Signals eine Mehrzahl der Anfangszeitpunkte (i) mindestens einem Block (B1, B2, B3) zugeordnet werden.

2. Verfahren nach Anspruch 1, **dadurch gekennzeichnet,**
**dass** aus den zu den jedem Block (B1, B2, B3) zugeordneten Anfangszeitpunkten (i) korrespondierenden Teilelementen ($\gamma^i$) jeweils ein Blockteilelement ($\gamma[B1], \gamma[B2], \gamma[B3]$) bestimmt wird.

3. Verfahren nach Anspruch 1 oder 2, **dadurch gekennzeichnet,**
**dass** bei Verwendung einer Mehrzahl von Blöcken (B1, B2, B3) mindestens ein Anfangszeitpunkt (i) mindestens zwei Blöcken zugeordnet wird.

4. Verfahren nach einem der Ansprüche 1 bis 3, **dadurch gekennzeichnet,**
**dass** es sich bei der Bearbeitung des empfangenen Signals um eine Entscheidung über den Empfang einer zum Empfänger (BS) gesendeten Präambel und gegebenenfalls um die Ermittlung des Inhaltes einer zum Empfänger (BS) gesendeten Präambel handelt.

5. Verfahren nach Anspruch 4, **dadurch gekennzeichnet,**
**dass** die Präambel Bestandteil eines Zufallszugriffs auf einem Zufallszugriffskanal ist.

6. Verfahren nach einem der Ansprüche 1 bis 5, **dadurch gekennzeichnet,**
**dass** die Mehrzahl der dem mindestens einen Block (B1, B2, B3) zugeordneten Anfangszeitpunkte (i) aus Anfangszeitpunkten (i) gebildet wird, welche zu solchen Teilelementen ($\gamma^i$) korrespondieren, welche einen ersten Schwellenwert (S1) übertreffen.

7. Verfahren nach einem der Ansprüche 1 bis 6, **dadurch gekennzeichnet,**
**dass** jedes Blockteilelement ($\gamma[B1], \gamma[B2], \gamma[B3]$) mit einem zweiten Schwellenwert (S2) verglichen wird.

8. Verfahren nach Anspruch 7, **dadurch gekennzeichnet,**
**dass** in Abhängigkeit von dem Ergebnis des Vergleichs mit dem zweiten Schwellenwert (S2) Teilelemente ($\gamma^i$) mit einem dritten Schwellenwert (S3) verglichen werden und
**dass** in Abhängigkeit von dem Ergebnis des Vergleichs mit dem dritten Schwellenwert (S3) mindestens ein Blockteilelement ($\gamma[B1], \gamma[B2], \gamma[B3]$) mit ei-

nem vierten Schwellenwert (S4) verglichen wird.

9.  Verfahren nach Anspruch 7 oder 8, **dadurch gekennzeichnet,**
    **dass** in Abhängigkeit von dem Ergebnis des Vergleichs mit dem zweiten und/oder dem dritten und/oder dem vierten Schwellenwert (S2, S3, S4) das empfangene Signal als an den Empfänger (BS) gesendetes Signal gewertet wird.

10. Verfahren nach Anspruch 9, **dadurch gekennzeichnet,**
    **dass** bei einer Wertung als gesendetes Signal in Abhängigkeit von dem Ergebnis des Vergleichs mit dem zweiten und/oder dem dritten und/oder dem vierten Schwellenwert (S2, S3, S4) ein Sendezeitpunkt ermittelt wird.

11. Verfahren insbesondere nach einem der Ansprüche 1 bis 10 zur Bestimmung eines Verzögerungsleistungsdichtespektrums umfassend eine Mehrzahl von Teilelementen ($\gamma^i$) eines mit einer Empfangsantenne (A1, A2) eines Empfängers (BS) eines CDMA Funkkommunikationssystems empfangenen Signals vorgegebener Länge (L),
    wobei jedes Teilelement ($\gamma^i$) ein Maß für die Stärke einer ab einem zu dem Teilelement ($\gamma^i$) korrespondierenden Anfangszeitpunkt (i) empfangenen Signalfolge der vorgegebenen Länge (L) darstellt,
    **dadurch gekennzeichnet,**
    **dass** zur Bestimmung jedes Teilelementes ($\gamma^i$) des Verzögerungsleistungsdichtespektrums ein oder mehrere Bestandteile (T1, T2, T3, T4, T5, T6; T7, T8, T9, T10, T11, T12, T13; T14, T15) der jeweiligen Signalfolge herangezogen werden, wobei die Gesamtlänge als die Summe der Längen des oder der herangezogenen Bestandteile der jeweiligen Signalfolge kürzer als die vorgegebene Länge (L) ist.

12. Verfahren nach Anspruch 11, **dadurch gekennzeichnet,**
    **dass** sich für mindestens ein Teilelement ($\gamma^i_{A1}$) das oder die zur Bestimmung herangezogenen Bestandteile (T14) von dem oder den zur Bestimmung von mindestens einem weiteren Teilelement ($\gamma^{i+1}_{A1}$) herangezogenen Bestandteile (T15) unterscheiden.

13. Verfahren nach Anspruch 11, **dadurch gekennzeichnet,**
    **dass** es auf einen Empfänger (BS) mit einer Mehrzahl von Empfangsantennen (A1, A2) angewendet wird, welche das Signal vorgegebener Länge (L) empfangen.

14. Verfahren nach Anspruch 12, **dadurch gekennzeichnet,**
    **dass** für jede Empfangsantenne (A1, A2) ein Verzögerungsleistungsdichtespektrum des Signals vorgegebener Länge (L) bestimmt wird.

15. Verfahren nach Anspruch 13, **dadurch gekennzeichnet,**
    **dass** die Summe der Gesamtlängen der von der Mehrzahl von Empfangsantennen (A1, A2) zur Bestimmung von mindestens einem Teilelement ($\gamma^i_{A1}$, $\gamma^i_{A2}$) herangezogenen Bestandteile (T1, T2, T3, T4, T5, T6; T7, T8, T9, T10, T11, T12, T13; T14, T15) der jeweiligen Signalfolge der vorgegebenen Länge (L) entspricht oder die vorgegebene Länge (L) übertrifft.

16. Verfahren nach einem der Ansprüche 13 oder 14, **dadurch gekennzeichnet,**
    **dass** aus den Verzögerungsleistungsdichtespektren der Empfangsantennen (A1, A2) mindestens ein gemeinsames Verzögerungsleistungsdichtespektren ermittelt wird.

17. Empfangsseitige Einrichtung (ESE) in einem CDMA Funkkommunikationssystem zur Bearbeitung eines Verzögerungsleistungsdichtespektrum eines Signals vorgegebener Länge (L), welches eine Mehrzahl von Teilelementen ($\gamma^i$) umfasst, wobei jedes Teilelement ($\gamma^i$) ein Maß für die Stärke einer ab einem zu dem Teilelement ($\gamma^i$) korrespondierenden Anfangszeitpunkt (i) empfangenen Signalfolge der vorgegebenen Länge (L) darstellt,
    **dadurch gekennzeichnet,**
    **dass** es Mittel zum Zuordnen einer Mehrzahl von Anfangszeitpunkten (i) zu mindestens einem Block (B1, B2, B3) aufweist.

# FIG 1

A1    A2

BS

ESE

MS

# FIG 2

Signalfolge

| A1 | A2 | A1 | A2 | A1 | A2 |
|----|----|----|----|----|----|
| T1 | T2 | T3 | T4 | T5 | T6 |

$\gamma^i_{A1}$                    $\gamma^i_{A2}$

L

# FIG 3

Signalfolge

| A1 | | A1 |
|---|---|---|
| T7 | T8 | T9 |

$$\gamma^i_{A1}$$

| A2 | | A2 | |
|---|---|---|---|
| T10 | T11 | T12 | T13 |

$$\gamma^i_{A2}$$

L

# FIG 4

Signalfolge

| A1 | |
|---|---|
| T14 | T15 |

$$\gamma^i_{A1}$$

L

Signalfolge

| | A1 |
|---|---|
| T14 | T15 |

$$\gamma^{i+1}_{A1}$$

L

FIG 5

# FIG 6

$\gamma^i$>Schwellenwert S1?

Blockbildung, berechne $\gamma^{Bj}$

$\gamma^{Bj}$>Schwellenwert S2?

Entscheidung

neue Blockbildung, berechne $\gamma^{Bj}$

$\gamma^i$>Schwellenwert S3?

$\gamma^{Bj}$>Schwellenwert S4?

Entscheidung

**Europäisches Patentamt**

**EUROPÄISCHER RECHERCHENBERICHT**

Nummer der Anmeldung

EP 02 02 6103

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 209 816 A (TOKYO SHIBAURA ELECTRIC CO) 29. Mai 2002 (2002-05-29)<br>* Zusammenfassung; Abbildungen 2A,,2B *<br>* Absätze [0028],[0029],[0034],[0066],[0080]-[0083],[0122] *<br>--- | 1-3,17 | H04B1/707 |
| X | US 5 644 591 A (SUTTON TODD R) 1. Juli 1997 (1997-07-01)<br>* Zusammenfassung; Abbildungen 2,4 *<br>----- | 1-3,17 | |

| RECHERCHIERTE SACHGEBIETE (Int.Cl.7) |
|---|
| H04B |

Der vorliegende Recherchenbericht wurde für alle Patentansprüche erstellt

| Recherchenort | Abschlußdatum der Recherche | Prüfer |
|---|---|---|
| MÜNCHEN | 14. April 2003 | Bauer, F |

**EP 1 422 831 A1**

Europäisches

Patentamt

Nummer der Anmeldung

EP 02 02 6103

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-3, 17

15

**Europäisches**
**Patentamt**

**MANGELNDE EINHEITLICHKEIT**
**DER ERFINDUNG**
**ERGÄNZUNGSBLATT B**

**Nummer der Anmeldung**

**EP 02 02 6103**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-3,17

   Die Ansprüche 1, 2 und 17 beziehen sich auf ein Verfahren (bzw. auf eine entsprechende Vorrichtung) zur empfängerseitigen Bearbeitung eines in einem Empfänger eines CDMA Funkkommunikationssystems empfangenen Signals vorgegebener Länge, wobei im Empfänger ein Verzögerungsleistungsdichtespektrum des Signals umfassend eine Mehrzahl von Teilelementen bestimmt wird, und wobei jedes Teilelement ein Maß für die Stärke einer ab einem zu dem Teilelement korrespondierenden Anfangszeitpunkt empfangenen Signalfolge der vorgegebenen Länge darstellt, dadurch gekennzeichnet, dass zur Bearbeitung des empfangenen Signals eine Mehrzahl der Anfangszeitpunkte mindestens einem Block zugeordnet werden.

   Anspruch 3 bezieht sich weiterhin darauf, dass mindestens ein Anfangszeitpunkt mindestens zwei Blöcken zugeordnet wird.

2. Ansprüche: 4-5

   Die Ansprüche 4-5 beziehten sich weiterhin auf den Empfang eines Präambels.

3. Ansprüche: 6-10

   Die Ansprüche 6-10 beziehten sich weiterhin darauf, dass die Mehrzahl der Punkten eines Blockes zu Teilelementen korrespondieren, welche einen ersten Schwellenwert überschreiten.

4. Ansprüche: 11-16

   Die Ansprüche 11-16 beziehten sich weiterhin darauf, dass zur Bestimmung jedes Teilelementes Bestandteile der jeweiligen Signalfolge herangezogen werden, wobei die Gesamtlänge als die Summe der Längen der herangezogenen Bestandteile der jeweiligen Signalfolge kürzer als die vorgegebene Länge ist.

ANHANG ZUM EUROPÄISCHEN RECHERCHENBERICHT
ÜBER DIE EUROPÄISCHE PATENTANMELDUNG NR.

EP 02 02 6103

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-04-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 1209816 | A | 29-05-2002 | JP | 2002164811 A | 07-06-2002 |
| | | | CN | 1356798 A | 03-07-2002 |
| | | | US | 2002064213 A | 30-05-2002 |
| US 5644591 | A | 01-07-1997 | AU | 687228 B | 19-02-1998 |
| | | | AU | 3095895 A | 04-03-1996 |
| | | | BR | 9506273 A | 12-08-1997 |
| | | | CA | 2172370 A | 15-02-1996 |
| | | | CN | 1130962 A,B | 11-09-1996 |
| | | | EP | 0721703 A | 17-07-1996 |
| | | | FI | 961294 A | 20-03-1996 |
| | | | IL | 114762 A | 30-10-1998 |
| | | | JP | 3040481 B | 15-05-2000 |
| | | | JP | 9503374 T | 31-03-1997 |
| | | | WO | 9604716 A | 15-02-1996 |
| | | | ZA | 9505939 A | 22-04-1996 |

EPO FORM P0461

Für nähere Einzelheiten zu diesem Anhang : siehe Amtsblatt des Europäischen Patentamts, Nr.12/82